(19) Europäisches Patentamt
European Patent Office
Office européen des brevets

(11) **EP 4 246 432 A1**

(12) **EUROPEAN PATENT APPLICATION**

(43) Date of publication:
**20.09.2023  Bulletin 2023/38**

(21) Application number: **22162838.1**

(22) Date of filing: **17.03.2022**

(51) International Patent Classification (IPC):
**G06T 7/00** *(2017.01)*        **G06T 7/12** *(2017.01)*
**G06T 7/162** *(2017.01)*       **G06T 7/11** *(2017.01)*
**G06T 7/30** *(2017.01)*        **G06T 7/155** *(2017.01)*

(52) Cooperative Patent Classification (CPC):
**G06T 7/11; G06T 7/12; G06T 7/155; G06T 7/162;
G06T 7/30;** G06T 2207/10028; G06T 2207/20152;
G06T 2207/30036

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **3Shape A/S
1060 Copenhagen K (DK)**

(72) Inventor: **HUSEINI, Admir
1060 Copenhagen K (DK)**

(74) Representative: **Guardian
IP Consulting I/S
Diplomvej, Building 381
2800 Kgs. Lyngby (DK)**

(54) **TOOTH SUBDIVISION AND ALIGNMENT**

(57)    The present disclosure relates to system and a computer implemented method for digital tooth representation subdivision and alignment, the method comprising the steps of: obtaining at least a first and a second tooth digital representation of a tooth (002); subdividing each of the at least first and second tooth digital representations into at least two sub-regions (004); applying a separate alignment process for aligning a sub-region of the first tooth digital representation with a corresponding sub-region of the second tooth digital representation (005); and based on the sub-regions alignment, aligning the first tooth digital representation to the second tooth digital representation (006).

001

| |
|---|
| Obtaining jaw representations 002 |

| |
|---|
| Segment the jaw representations into tooth representations 003 |

| |
|---|
| Subdividing tooth representations into sub-regions 004 |

| |
|---|
| Aligning corresponding sub-regions 005 |

| |
|---|
| Based on the sub-regions alignment, aligning the tooth digital representations 006 |

FIG. 1

## Description

## Technical field

The invention relates to a method for aligning digital representations of teeth based on subdivision and to a system for acquisition and processing of a tooth digital representation.

## Background

Dentists, when assessing the status of teeth of a subject, make profitable use of systems capable of scanning a jaw of a subject, such as intra-oral scanners. These scanners are able to produce a digital representation of a jaw of a user, or teeth of a user, which may be used for displaying and/or for further processing. A very important feature of these kind of systems is to be provided with processing units configured to align digital representations of jaws and/or teeth, taken for example, from the same user at different points in time. A well-known technique for alignment of these digital representations is Iterative Closest Point (IPC). The capability to align digital representation is particularly important when assessing the progress of, for example, an orthodontic treatment aimed at moving the teeth to a normal position, from a displaced position (e.g. treating malocclusion). These types of treatments are especially used in children or teen-agers, but are used also in adults. Children may have displaced teeth. In adults, treatment may be needed if no treatment was done during childhood, or even in cases where the teeth have been displaced for some reason or when, for example, the overbite (malocclusion) is causing discomfort.

To assess the quality of an orthodontic treatment it is therefore important to be able to align digital representations of jaws and teeth taken in the mouth of a user at different points in time, or even compare a digital representation of the jaw or teeth of a user with a model representation.

For example, a tooth-to-tooth alignment between a tooth first digital representation at a first point in time and the same tooth digital representation at a second point in time is very useful to assess the status of a tooth, in particular by properly aligning the two representations it is subsequently possible to obtain a better understanding of how the tooth has moved.

Also, in restorative treatments being able to align and subsequently compare tooth representations of the same tooth when anatomical changes, such as chipping, or veneering have occurred, gives the dentist a very good understanding of the dental situation of a patient and facilitates treatment planning.

## Summary

Tooth-to-tooth digital representation alignments are difficult to perform by known techniques when the tooth is broken, chipped or presents a veneer, as there are severe volume differences between a first tooth representation that is not chipped and a second tooth representation that is chipped, or vice versa. In particular the alignment is difficult, and current techniques present poor results, when one of the first and second tooth digital representations presents a chip, a rupture, a fracture or a veneer. This is a problem for the dentist because when alignment fails on some or several digital representations of teeth, the dentist cannot rely on the system for assessing the status of the teeth.

It is an object of the present invention to solve the problems above.

The present disclosure relates to a computer implemented method for digital tooth representation subdivision and alignment, the method comprising the steps of:

a. obtaining at least a first and a second tooth digital representation of a tooth;
b. subdividing each of the at least first and second tooth digital representations into at least two subregions;
c. applying a separate alignment process for aligning a sub-region of the first tooth digital representation with a corresponding sub-region of the second tooth digital representation; and
d. based on the sub-regions alignment, aligning the first tooth digital representation to the second tooth digital representation.

In the context of the disclosure, terms "tooth digital representation" and "tooth representation" are used interchangeably and have the same meaning. Accordingly, by providing and aligning sub-regions of the tooth representation as disclosed above an improved alignment process is achieved, in particular when aligning two or more tooth representations where the tooth has been chipped, damaged or otherwise changed in anatomy between scanning or otherwise obtaining the at least first and second digital tooth representations.

It has to be understood that with the term corresponding sub-regions of a first and a second tooth representation the inventors refer to sub-regions of the representation that relate to the same anatomical parts of the tooth. For example, a cervical-buccal-mesial sub-region of the first tooth representation has a corresponding cervical-buccal-mesial sub-region of the second tooth representation.

In the present disclosure, any digital representations of jaws, or teeth, may be meshes, pixel clouds and/or voxel-based volumetric scans or any other digital representation of jaws and/or teeth, in particular 2-dimensional or 3-dimensional representations. In the context of the disclosure, terms "jaw digital representation" and "jaw representation" are used interchangeably and have the same meaning.

The present disclosure further relates to a system for acquisition and processing of a tooth digital representation comprising:

a. at least one input peripheral, such as a scanner, configured to generate image data of a jaw and/or a tooth;
b. at least one output peripheral, such as a display, configured to display at least one digital representation of jaw or teeth and to provide visual data of the quality of the digital representation alignment; and
c. at least one processing unit configured to generate, based on the image data, digital representations of jaws and/or teeth and further configured to perform alignment of teeth based on alignment of sub-regions.

The inventors have realized that the presently disclosed system is adapted for performing the steps of the presently disclosed method.

In one embodiment of the present disclosure, the at least first and second representation of the tooth are obtained by segmentation of respectively an at least first and second jaw representation into separate tooth representations.

It is common for teeth to change their position over time. This can be due to different causes, such as orthodontic treatment, accidents, daily use of the teeth, growing up etc.

For dentists to be able to assess the status of a tooth it is beneficial to be able to compare images based on scans of jaws of a subject in different points in time. As teeth change the position in time, comparing the jaw digital representation may not be enough, and the dentist benefits from being able to scrutinize the alignment of single teeth. Therefore, in an embodiment of the present disclosure, a segmentation is performed to obtain digital representation of single teeth and further a complete initial tooth-to-tooth alignment is performed. However, in case of teeth that have changed their shape between a first and a second scan, for example in case of chipped teeth, or broken teeth, or teeth who have been subject to the application of veneers, a complete initial tooth-to-tooth alignment of the tooth digital representations would fail. The inventors have realized that this problem may be overcome by sub-dividing the tooth representation into sub-regions. The inventors have realized that, even in case of chipped teeth, some sub-regions, that are not affected by the tooth being broken or chipped, would align. The inventors have further realized that information related to the alignment of the sub-regions may be used to define the starting point of a final tooth-to-tooth complete alignment, and that such last complete alignment, is successful if the number of sub-regions that were successfully aligned is typically more than half.

According to one embodiment of the present disclosure, a first scan, such as an intra-oral scan, is performed on a subject in order to obtain image data of a jaw. Further, a first digital representation of the jaw is obtained from the image data by the processing unit. Successively, a segmentation is performed on the jaw digital representation to obtain digital representations of single teeth. For example, if the jaw digital representation is a mesh, the segmentation process will generate a number of tooth meshes, each corresponding to a different tooth of the jaw. In this embodiment, a second jaw scan is performed on the same subject at a different point in time than the first, and subsequently, second digital representations of each tooth are obtained. Once a digital representation of a tooth at a first point in time is obtained and a second representation of the same tooth at a second point in time is obtained, the dentist benefits, in order to assess the status of the tooth, from the first and second tooth representation to be aligned. If the tooth did not suffer any substantial anatomical or morphological changes, such from an accident or restorative dental work, an alignment based on the complete representations of the tooth would be successful. If the tooth has suffered from being chipped or broken, or it newly present a veneer, the inventors have realized that the representations of the tooth may be subdivided into sub-regions, the sub-regions may be aligned separately and the alignment of the sub-regions may be used as a starting point for a final complete tooth-to-tooth alignment, which may be successfully used by a dentist to assess the status of a tooth.

The inventors are familiar with the Iterative Closest Point (ICP) technique/approach, which is a technique for aligning digital representations. Details about the ICP technique may be found in this paper: "A method for registration of 3-D shapes. IEEE Transactions on Pattern Analysis and Machine Intelligence, 14(2);239-256, 1992". Further details on ICP may be found in patent application EP2345387A2, "manufacture of a dental model". ICP is based on measuring distances between points from, for example, the first tooth representation, and finding correspondences between points from, for example, the second representation, with minimum distance within each other. The ICP technique is iterative and, at the end of the iterations of the Iterative Closest Point process, each point in a first representation is assigned a corresponding point on the second representation and the representations are aligned with each other. Unless anything else is stated, alignments discussed herein can be performed by the ICP technique.

In one embodiment of the present disclosure, for each tooth, the step is performed to align the at least first and second tooth representations directly. This tooth-to-tooth complete initial alignment may be based on ICP (Iterative Closest Point) and may or may not succeed depending on the status of the tooth in the first and second digital representations. For example, if the tooth is chipped, or broken, or has veneers in one of the two representations, the two representations may not be aligned successfully. The success of this complete initial tooth-to-tooth initial alignment is measured by computing an indication of the quality of the initial complete tooth-to-tooth alignment.

By complete tooth-to-tooth alignment it is meant to refer to an alignment based on the complete first tooth representation and the complete second tooth representation, for example based on a complete first tooth mesh and a complete second tooth mesh. In contrast, alignment of a sub-region of a first tooth representation, and a corresponding sub-region of a second tooth representation is not referred to as complete tooth-to-tooth alignment but is referred to as sub-regions alignment.

In a further embodiment, if the indication of the quality of the initial tooth-to-tooth alignment is below a first threshold, then a subdivision of the tooth representation into sub-regions is triggered. According to this embodiment, a first tooth representation is subdivided into sub-regions and a second tooth representation is subdivided into corresponding sub-regions. Sub-regions are defined by the morphology of the tooth. For example, a sub-region may be buccal, or lingual, or mesial, or distal, or occlusal, or cervical, or combinations thereof. Accordingly, by sub-dividing the tooth representation into sub-regions not all the sub-regions are affected by a chip, or a broken part of the tooth, or by a veneer. Therefore, when aligning each single sub-region independently, a number of sub-regions align very well. Information based on the alignment of the sub-regions is then used to perform a final tooth-to-tooth alignment, which provides an improved alignment since the sub-regions with change in morphology, e.g. chipping, veneered etc., can be disregarded or weighted less during alignment.

In one embodiment of the present disclosure, the indication of the quality of an alignment of the first tooth representation to the second tooth representation is based on an alignment matrix and/or an alignment parameter and/or a statistical histogram and/or a tooth difference map and/or a translation of a centre point.

In one embodiment of the present disclosure, the processing unit is further configured to measure an indication of a quality of an alignment. The indication of quality may be based on the analysis of a histogram of the distances of corresponding points between the first and the second representation. A distance scale can be defined as follows: 1.5 mm distance may be considered as very large; 1.5-0.5 mm distance may be considered as large; 0.5-0.3 mm may be tolerated; 0.3-0.1 mm may be expected distance value and less than 0.1 mm may be considered as good value In particular, a large average distance or a large number of corresponding points with large or very large distance may generate an indication of poor quality of the alignment. In contrast a small average distance and/or a small number of corresponding points with large distance may provide an indication of sufficient or good quality of the alignment. According to ICP technique, alignment may be based on finding corresponding points in two representations to be aligned. For each pair of corresponding points, a distance may be measured. The list of all the distances for all the corresponding points may be represented by a histogram or a difference map. Further information can be retrieved by calculating a distance between center points of the first and second tooth representations. Corresponding points in the first and second representations may be found in the following way. Given a point in the first representation, a point with minimal distance to it in the second representation may be selected and considered to be a correspondence. It has to be highlighted that the ICP is iterative, and therefore once the correspondence between points is found in a first iteration, a different correspondence may be found in a second iteration and so on. The algorithm converges when the distances of the corresponding points have reached a minimum. At the end of the ICP algorithm, statistics of the histogram may be extracted and/or center point distances to obtain an indication of a quality of an alignment.

**Description of the drawings**

The invention will in the following be described in greater detail with reference to the accompanying drawings:

Fig. 1 illustrates a flow diagram of a method for aligning tooth meshes according to one embodiment of the present disclosure;
Fig. 2 illustrates a schematic view of teeth meshes;
Fig. 3 illustrates a schematic view of a tooth mesh, wherein a central groove has been identified using a center vector field;
Fig. 4 illustrates a schematic view of a jaw mesh, with a buccal-lingual plane;
Fig. 5 illustrates a schematic view of a jaw mesh, with a mesial-distal plane;
Fig. 6 illustrates a schematic view of a portion of a jaw mesh, with a buccal-lingual plane and a mesial-distal plane;
Fig. 7 illustrates a schematic view of teeth meshes, with a buccal-lingual plane, a mesial-distal plane, a cervical region, an occlusal region and an intermediate region;
Fig. 8 illustrates a schematic view of teeth meshes, with a buccal-lingual plane, a mesial-distal plane, a molar cervical region, a molar occlusal region and a molar intermediate region;
Figs. 9A-9B illustrate a schematic view of a jaw mesh with a curvature image of teeth and a plane region;
Fig. 10 illustrates a schematic diagram of one embodiment of a system for acquisition and processing of a tooth digital representation.

**Detailed description**

*Alignment*

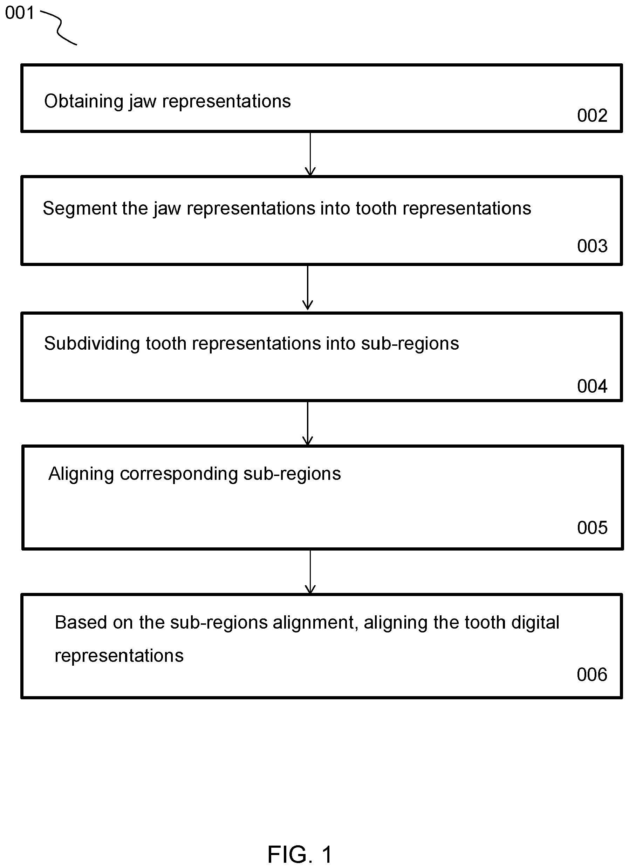

As shown in Fig. 1, a method for alignment of at least a first and a second tooth representation 001 may start by obtaining at least a first and a second jaw representation 002. These jaw representations may be obtained by, for example, a first and a second oral scan performed at different times on the same subject, and therefore representing jaws of the same subject wherein certain teeth may have been subject to displacement and/or chipping and/or other modifications.

A further step of the method may comprise a segmentation 003 of the jaw representations. For example, if the jaw representations are jaw meshes, the result of the segmentation may be teeth meshes, each related to a different tooth of the jaw. The result of the segmentation, the teeth meshes, may be teeth representations. Thus, a particular tooth in the jaw may have at least two tooth representations, one tooth representation in the first jaw representation and a corresponding tooth representation in the second jaw representation. Once teeth representations are obtained, it may be possible to perform a tooth-to-tooth alignment between corresponding teeth of the first and the second jaw representations. A first initial complete tooth-to-tooth alignment may be performed, but this initial complete alignment may fail in cases where a tooth has been chipped or has received veneers at a time between obtaining the first and the second jaw representation of the patient.

The inventors have realized that this problem may be overcome by subdividing the tooth representations into at least two sub-regions. For example, the tooth representation may be sub-divided into a buccal sub-region and a lingual sub-region. More in detail, the tooth may be subdivided into twelve sub-regions. Therefore, the method may comprise a further step to sub-divide the tooth representations into sub-regions 004.

The method may further comprise the step of aligning the corresponding sub-regions separately 005. With corresponding sub-regions, it is meant sub-regions corresponding to the same morphological regions of the tooth in the first and the second tooth representation. For example, a cervical-buccal-mesial sub-region of the first tooth representation is aligned with a cervical-buccal-mesial sub-region of the second tooth representation. Alignment of the sub-regions gives a very good starting point for the complete tooth-tooth final alignment, in particular if at least half of the sub-regions align with good quality. Therefore, a further step of the method may be, based on corresponding sub-regions alignment, align the tooth-to-tooth representations 006.

In this context, a calculated sum of squares of distances between vertices of the tooth meshes can be an indication of quality. In an example, if an average distance between the vertices in the tooth meshes is 0.150 mm then an average square distance is 0,0225. If a mesh has 1000 vertices, then an expected calculated sum of squares of distances would be $1000 \times 0.0225 = 22,5$. If nevertheless, a value of 125 as the calculated sum of squares of distances is obtained, then alignment of the tooth meshes is not considered as of good quality.

Alignment of each sub-region separately may be based on iteratively finding correspondences between points in corresponding sub-regions of the at least first and second tooth representations. In one embodiment, the alignment within corresponding sub-regions may be based on Iterative Closest Point (ICP) technique between sub-regions. For example, the cervical-buccal-mesial sub-region of the first tooth representation may be aligned to the cervical-buccal-mesial sub-region of the second tooth representation. Consequently, all other corresponding sub-regions may be aligned separately. In case of chipped teeth, the inventors have realized that some of the sub-regions may not be aligned. However, because the remaining sub-regions may be aligned, the inventors have realized that this may give a very good starting point for a final complete tooth-to-tooth alignment, preferably if at least half of the sub-regions are aligned, and the final tooth-to-tooth alignment converges to a higher quality, or to a quality that is useful for a user, such as a dentist, to perform an assessment of the status of the tooth.

When correspondences between points on the tooth representations are sought, a predefined search distance may be set. A point may be a vertex on the tooth representation. Any point being further away than the predefined distance is rejected as a correspondence. If a high value for the search distance is set, then more candidates for corresponding points exist, but they might lie further apart from the real target value that would result in good alignment. This high value of the search distance may be useful in initial phases of ICP technique, in order to get an initial alignment. Once such initial alignment is found, a smaller search distance can be used, so that only correspondences that are closer to the real target value may be considered. By using smaller search distance value, smaller improvements in the alignment are obtained, but the values obtained are more precise. This step is called alignment refinement step. The inventors have realized that the final tooth-to-tooth alignment, in order to converge using the ICP technique, requires ICP search distance to be set below a certain threshold, preferably 100 micrometers. This value may ensure that the sub-regions of the tooth representations that have been chipped are not to be used by the algorithm.

In particular, in case of chipped or broken teeth or veneers, the inventors have realized that an initial full or complete tooth-to-tooth alignment based on correspondences and Iterative Closest Point technique, may not converge to a good quality. The inventors have furthermore realized that the tooth-to-tooth alignment may instead converge to a good quality if the alignment is based on prior alignment of sub-regions (Fig. 1). In case of chipped teeth, some of the sub-regions, preferably less than half, may not align but other sub-regions, preferably at least half of the sub-regions, may align with good quality, based on correspondences found with the Iterative Closest Point approach. The alignment of the sub-regions, or of a subset of the sub-regions, may provide a successful starting point for a successive final full tooth-to-tooth alignment based on Iterative Closest Point technique/approach.

In one embodiment of the present disclosure, a tooth representation is subdivided into sub-regions. Such subdivision is obtained based on the morphology of the teeth and based on the identification of specific planes: the buccal-lingual plane, the mesial-distal plane and some other additional planes.

One or more steps of the method 001 may be performed automatically. In one embodiment, one or more steps of the method 001 may be performed by use of a neural network, such as a convolutional neural network.

*Tooth anatomy*

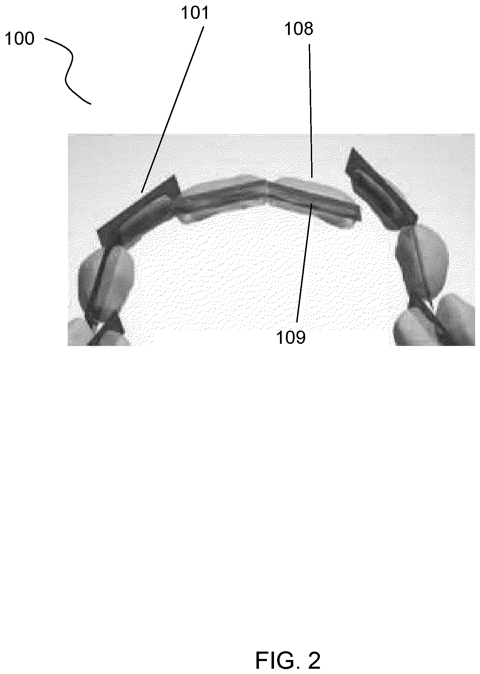

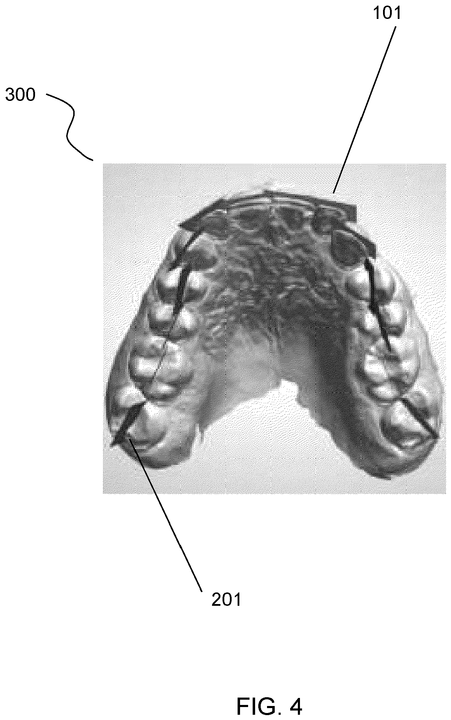

Each tooth has a buccal side and a lingual side. The lingual side is the side of the tooth closest to the tongue at rest, whereas the buccal side is the side of the tooth closest to the mouth and opposite the tongue at rest. In the context of this disclosure a buccal-lingual plane is a plane that traverses the center of a tooth representation, is parallel to a vertical direction of a tooth representation and divides the tooth representation into a buccal sub-region and a lingual sub-region. This is shown as an example in Fig. 4 where buccal-lingual planes of the teeth representations of a jaw are highlighted. Fig 2 is showing buccal-lingual planes 101 for incisors and canines, a buccal sub-region 108 and a lingual sub-region 109.

Each tooth has a mesial and a distal side. The mesial side faces the front of the mouth. The distal side faces the back of the mouth. In the context of this disclosure a mesial-distal plane is a plane that traverses the center of a tooth representation, is parallel to a vertical direction of the tooth representation and divides the tooth representation into a mesial sub-region and a distal sub-region. This is shown as an example in Fig, 5, where mesial-distal planes 202 of the teeth representations of a jaw are highlighted and the mesial 208 sub-region and distal 209 sub-region are visible.

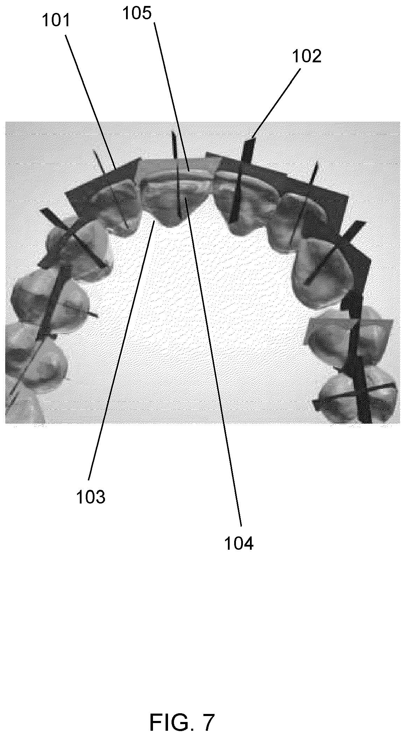

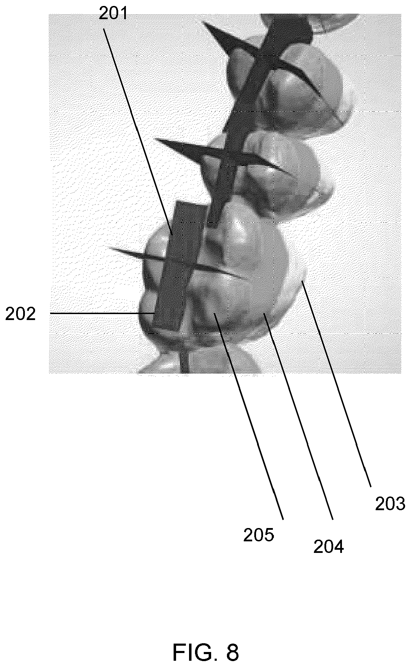

A tooth also has a cervical side and an occlusal side. The occlusal side is the biting side, and the cervical side is opposite to the occlusal side and is located towards the gingiva. In one embodiment of this disclosure two additional planes, perpendicular to both buccal-lingual plane and mesial-distal plane, are referred to as planes subdividing the tooth representation into a cervical region, an intermediate region and an occlusal region. Fig. 7 shows the occlusal sub-region 105, the intermediate sub-region 104 and the cervical sub-region 103. Fig 8 refers to sub-regions of molars and premolars: an occlusal sub-region 205, an intermediate region 204, a cervical region 203.

Fig. 2 shows separate incisors and canines meshes 100, and for each tooth mesh a buccal-lingual plane 101 has been identified.

In one embodiment of the present disclosure, as also shown as an example in Fig. 2 and 4, the first and second tooth representations may be subdivided by a buccal-lingual plane into a buccal sub-region 108 and a lingual sub-region 109.

It should be understood herein that the dividing does not refer to a split or segmentation of the mesh into separate meshes, however, dividing and sub-dividing refers to defining areas or regions on a single mesh that can be worked on separately as single virtual entities without splitting the mesh.

*Buccal-lingual plane for incisors and canines: use of high positive curvature facets*

In one embodiment of the present disclosure, as also shown as an example in Fig. 2, for incisors and canines a buccal-lingual plane is obtained by identifying high positive curvature facets and running a Principal Component Analysis (PCA) on the high curvature vertices. The inventors have realized that this can be done for canines and incisors thanks to the particular morphology of these teeth, which do not present multiple cusps and grooves as the molars. As incisors and canines do not present multiple cusps, identification of high positive curvature facets may be done in order to identify relevant points on the cusp. The identified points in the cusp, in combination with a known vertical direction of the tooth, may provide identification of a buccal-lingual plane for incisors and canines.

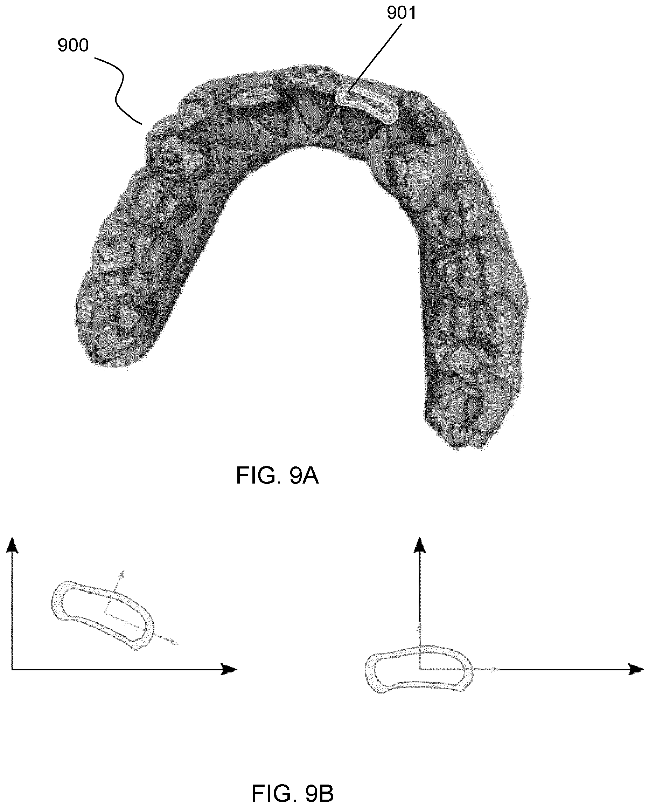

This is further illustrated in Fig. 9 where Fig. 9A shows a curvature image of the teeth in a jaw 900 mesh. As can be seen, the high positive curvature region 901 for an incisor tooth can be identified and separated. If this region is projected to a plane that is fitted to the points belonging to the identified region, it is possible to obtain a plane region, like shown in Fig. 9B. For this region one can apply the Principal Component Analysis to find the directions of highest variance. Alternatively, one can also simply fit a line, to get a single direction. The direction obtained in this way, together with a point that lies in the center of the tooth surface can be used to fit a plane, which gives the buccal lingual plane.

*Buccal-lingual plane for molars and pre-molars: use of a vector field*

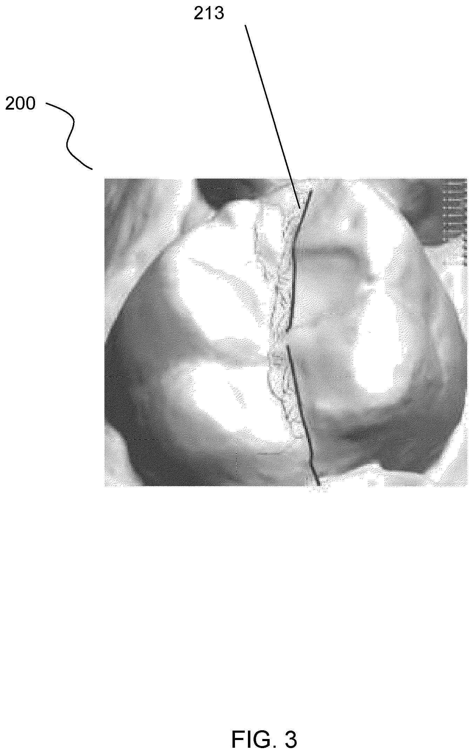

In one embodiment of the present disclosure, as also shown as an example in Fig. 3 and Fig. 4, for molar and/or pre-molar teeth a buccal-lingual plane is obtained, by use of a central vector field, centred at a central point of the tooth. As molar teeth present several cusps, at least four, and several grooves, the inventors have realized that looking at the curvatures of the facets to identify the buccal-lingual plane is not enough for molars and pre-molars as the algorithm may identify intermediate grooves or cusps and the resulting plane may be off. For molars and pre-molars, the inventors have realized that a buccal-lingual plane may traverse the center of the tooth and a groove including the center of the tooth. The inventors have therefore realized that the buccal-lingual plane can be identified by using a central vector field, centered at the center of the tooth, defining a steepest descendent vector field on the molars or pre-molars, moving along the vector field to traverse local minimal points on the molar and fit a plane to the local minimal points, using further information about a vertical direction of the tooth.

This method of obtaining the buccal-lingual plane, using vector fields, originates from a so-called watershed method of finding surface minima. This method may consider that water flows in a direction of maximal gravitational potential change. If water would flow from the top of the molar, then it is to be expected, that it would flow mostly through the molar grooves. Therefore, a vector field representing this assumption can be defined, which for each vertex and facet of the molar tooth mesh shows the direction of the water flow. As an initial guess, or a starting point, for a molar groove, a jaw arch spline may be used. Starting from any vertex of the spline, the flow having steepest descent along the tooth surface is tracked, and a region where the largest part of spline points flow into, is identified. It is then possible to fit a line on this region to obtain the buccal lingual plane.

Fig. 3 shows a schematic view of a tooth mesh 200, wherein a central groove 213 has been identified using a center vector field.

In one embodiment of the present invention, for molars and pre-molars, vector fields and discrete vector flows are used to identify the buccal-lingual plane.

In one embodiment of the present invention, for molars and pre-molars, a watershed technique is used to identify the buccal-lingual plane. This technique follows from the logic that water moves from a point with higher gravitational potential to points with lower potential. Similarly, in another embodiment, a technique inspired from electrostatics may be used, defining a potential function based on the difference between two plates and identify the central groove of the tooth where the buccal-lingual plane is fitted.

In this embodiment, having defined a potential function the movement in the potential field is followed by using the gradient of the field, such as a discrete gradient vector field defined by:

$$gradH\,(v) = vj - v$$

where $vj$ is the vertex with highest potential difference $H(vi) - H(v)$ to $v$. In order to find a correspondence between vertices, defined by the given potential, the inventors have realized that a discrete gradient can be defined as a directed graph structure $G = (V, Egrad)$, whose vertices are the vertices of the tooth $Ti$ and its edges are defined as $egrad = (v, vi)$, where $vi$ is the vertex with highest potential difference.

Having generated the gradient graph G, the inventors have realized that the vertices of interest may be found, by finding the path central vertices in this graph. Starting from any vertex $v$, the path $v, v1,..., w$ following the discrete gradient edges $egrad = (vi, vj)$ is traversed until reaching a vertex of local maximal potential $w$. At these vertices, the authors have realized that the graph has the structure of a sink, namely there are only incoming, but are no outgoing edges. The path centrality of a vertex $v$ is defined as the number of shortest paths that pass through $v$. The vertices that have the highest path centrality are the ones that have the most relevant features relative to the potential and gradient functions. Having detected these vertices, the inventors have realized that a simple clustering approach may be used, to group them together and fit a buccal-lingual plane.

Fig. 4 shows a schematic view of a jaw mesh 300, wherein segmentation into separate teeth has been performed and for each incisor and canine tooth mesh a buccal-lingual plane 101 has been identified and for each molar and pre-molar tooth a buccal-lingual plane 201 has been identified.

*Mesial-distal plane*

The first and second tooth representations may be further subdivided by a mesial-distal plane into a mesial sub-region and a distal sub-region.

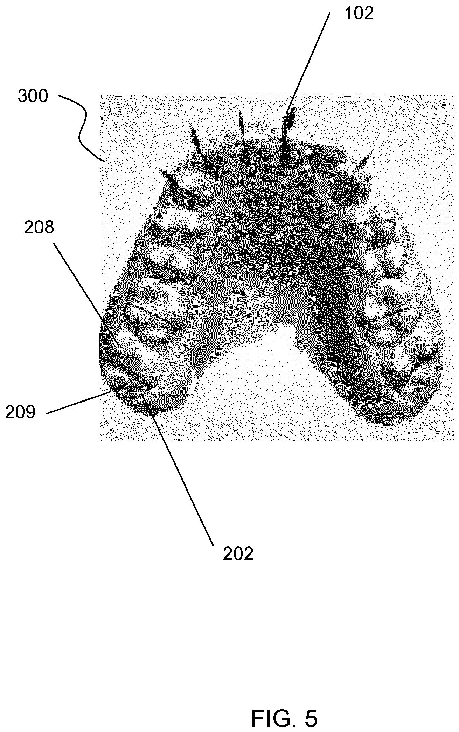

Fig. 5 shows a schematic view of a jaw mesh 300, wherein segmentation into separate teeth has been performed and for each incisor and canine tooth mesh a mesial-distal plane 102 has been identified and for each molar and pre-molar tooth a mesial-distal plane 202 has been identified.

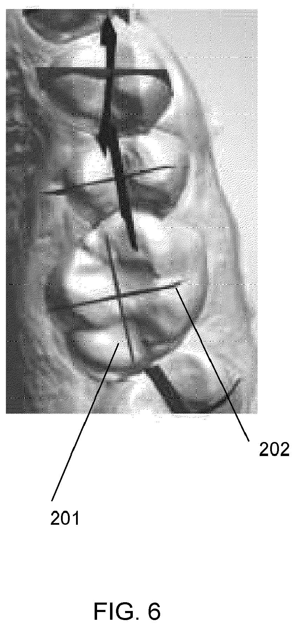

Fig. 6 shows a schematic view of a portion of a jaw mesh, wherein segmentation into separate molar and pre-molar teeth meshes has been performed, and for each tooth mesh a buccal-lingual plane 201 has been identified and a mesial-distal plane 202 has been identified.

In one embodiment of the present disclosure, as shown in Fig. 6, the mesial-distal plane 202 is orthogonal to the buccal-lingual plane 201, traverses a central point of the tooth representation and is parallel to the vertical direction of the tooth.

*Additional planes for cervical, occlusal and intermediate sub-regions*

The first and second tooth representations may be further subdivided by at least one additional plane into at least a cervical sub-region and at least an occlusal sub-region.

In one embodiment, as shown in Fig. 7 and Fig. 8, the additional planes may be two planes, and may subdivide a tooth representation into a cervical sub-region 103, 203, an intermediate sub-region 104, 204, and an occlusal sub-region 105, 205.

Fig. 7 shows a schematic view of teeth meshes, and for each tooth mesh a buccal-lingual plane 201 has been identified and a mesial-distal plane 202 has been identified, and, using two additional planes, a cervical region 103, an occlusal region 105 and an intermediate region 104 have been identified, and wherein the intermediate region may be intermediate-cervical or intermediate-occlusal.

Fig. 8 shows a schematic view of teeth meshes, and for each tooth mesh a buccal-lingual plane 201 has been identified and a mesial-distal plane 202 has been identified, and, using two additional planes, a molar cervical region 203, a molar occlusal region 205 and a molar intermediate region 204 have been identified, and wherein the intermediate region may be intermediate-cervical or intermediate-occlusal.

In one embodiment of the present disclosure, as shown in Fig. 7 and Fig. 8, the at least one additional plane comprises at least two additional planes, wherein said additional planes are orthogonal to both buccal-lingual plane and mesial-distal plane and are at different distances from an occlusal end of a tooth and are between the occlusal end and a cervical end of the tooth.

In one embodiment of the present disclosure, the number of sub-regions may be obtained by intersecting the buccal-lingual plane, the mesial-distal plane and the additional planes.

In particular, in one embodiment, the total number of sub-regions may be twelve: four cervical sub-regions four intermediate sub-regions and four occlusal sub-regions.

*Other aspects*

In one embodiment of the present disclosure, one of the first or second tooth representations may be an artificial representation of a tooth. In this embodiment, the alignment is performed between a tooth representation, such as a tooth mesh from a subject, and an artificial representation of a tooth, such as a library tooth model. A library tooth model is a predesigned digital model, representing either existing standard teeth that can be bought in bulk, a certain predesigned tooth model from a preferred dental technician or for example a tooth model designed using machine learning. This can for example be helpful where simulation of treatment planning is performed where a combined orthodontic and restorative treatment is evaluated. Thus, in this context it may be helpful to be able to compare one or more library teeth to a tooth of the patient to assess which model should be chosen as a restoration.

In one embodiment of the present disclosure, a change in position of the tooth between the at least first and the second tooth representation may be measured by measuring the distance of a central point of the first representation to the central point of a second representation.

In this embodiment, a central point of each tooth representation may be calculated based on the average of the positions of each vertex or point of the representation.

tation.

In this embodiment, a change in position of a tooth may be obtained by measuring the distance of the central point of the first tooth representation and the central point of the second tooth representation and based on a translation matrix.

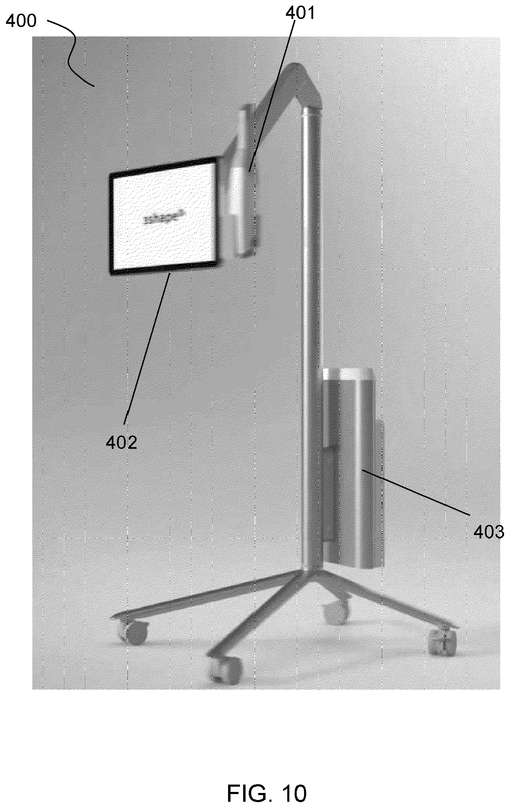

Fig. 10 shows a schematic diagram of one embodiment of a system 400, according to the present disclosure, for acquisition and processing of a tooth digital representation comprising an input peripheral for scanning 401 and acquiring image data, an output peripheral 402 for displaying jaw or tooth digital representations and digital representation alignment, and a processing unit 403 to process image data into jaw meshes, segment jaw meshes into teeth meshes, perform an initial complete tooth-to-tooth alignment, if the initial tooth-to-tooth alignment fails sub-divide each tooth mesh into sub-regions, align corresponding sub-regions independently and, based on sub-regions alignment, align the tooth meshes from the first and the second tooth meshes.

The system 400 may include a computer-readable storage medium configured to cause the processing unit 403 to carry out the method 001.

One embodiment of the presently disclosed system may further comprise a number of peripherals, such as a speaker to produce sounds, or a mouse or a keyboard or any other peripherals that a user may need in order to instruct the machine to perform a scan, a segmentation, an initial tooth-to-tooth alignment, a sub-region subdivision, a final tooth-to-tooth alignment and to visualize the alignment and/or get feedback on the quality of the alignment.

*Jaw alignment*

In one embodiment of the present disclosure, a first jaw representation and a second jaw representation may be aligned prior segmentation in order to find corresponding teeth. This way a first tooth representation of the first jaw representation may correspond to a first tooth representation of the second jaw representation, and so on... up to a thirty-second or a last tooth representation of a first jaw representation may correspond to a thirty-second or a last tooth representation of the second jaw representation.

Although some embodiments have been described and shown in detail, the disclosure is not restricted to such details, but may also be embodied in other ways within the scope of the subject-matter defined in the following claims. In particular, it is to be understood that other embodiments may be utilized, and structural and functional modifications may be made without departing from the scope of the present invention.

Benefits, advantages, solutions to problems and any component(s)/unit(s) that may cause any benefit, advantage, or solution to occur or become more pronounced are not to be construed as critical, required, or essential features or components/elements of any or all the claims or the invention. The scope of the invention is accordingly to be limited by nothing other than the appended claims. A claim may refer to any of the preceding claims, and "any" is understood to mean "any one or more" of the preceding claims.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structure or characteristic may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein but are to be accorded the full scope consistent with the language of the claims, wherein reference to an element in the singular is not intended to mean "one and only one" unless specifically so stated, but rather "one or more".

The invention will now be described in more detail by means of the following sequentially numbered items.

1. A computer implemented method for digital tooth representation subdivision and alignment, the method comprising the steps of:

   a. obtaining at least a first and a second tooth digital representation of a tooth;
   b. subdividing each of the at least first and second tooth digital representations into at least two sub-regions;
   c. applying a separate alignment process for aligning a sub-region of the first tooth digital representation with a corresponding sub-region of the second tooth digital representation; and
   d. based on the sub-regions alignment, aligning the first tooth digital representation to the second tooth digital representation.

2. The method according to item 1, wherein the at least first and second tooth digital representation is a mesh, a point cloud, a voxel-based volumetric scan, or any other digital representation or digital model of a tooth.

3. The method according to any one of the preceding items, further comprising the step of obtaining the at least first and second tooth digital representation by segmentation of respectively an at least first and second jaw representation.

4. The method according to any one of the preceding items, further comprising the step of aligning the at least first and second jaw representations.

5. The method according to any one of the preceding items, further comprising the step of obtaining the at least first and second jaw representations from an intra-oral scan of a same subject at different points in time.

6. The method according to any one of the preceding items, further comprising the step of aligning the at least first tooth digital representation and the second tooth digital representation directly based on a complete initial first tooth-to-tooth alignment using an Iterative Closest Point technique.

7. The method according to any one of the preceding items, further comprising the step of computing an indication of the quality of the alignment of the first tooth digital representation to the second tooth digital representation.

8. The method according to item 6, further comprising the step of computing an indication of the quality of the complete initial first tooth-to-tooth alignment.

9. The method according to items 7 or 8, wherein the subdivision of the at least first and second tooth digital representations into sub-regions is triggered when the indication of the quality of the complete initial first tooth-to-tooth alignment of the tooth meshes is below a first threshold.

10. The method according to items 8 or 9, wherein the indication of the quality of a representation alignment is based on an alignment matrix and/or an alignment parameter and/or a statistical histogram and/or a tooth difference map and/or a translation of a centre point.

11. The method according to any one of the preceding items, wherein the first and second tooth digital representations are subdivided by a buccal-lingual plane into a buccal sub-region and a lingual sub-region.

12. The method according to item 11, wherein the buccal-lingual plane is obtained, for incisors and canines, by identifying high positive curvature facets.

13. The method according to item 11, wherein the buccal-lingual plane is obtained, for molar and/or pre-molar teeth, by use of a central vector field, centred at a central point of the tooth.

14. The method according to any one of the preceding items, wherein the first and second tooth digital representations are subdivided by a mesial-distal plane into a mesial sub-region and a distal sub-region.

15. The method according to any one of the preceding items, wherein the first and second tooth digital representations are subdivided by at least one additional plane, preferably two additional planes, into at least a cervical sub-region and at least an occlusal sub-region.

16. The method according to any one of the preceding items, wherein a vertical direction of the tooth is computed based on the tooth representation.

17. The method according to items 11, 14 and 16, wherein the mesial-distal plane is orthogonal to the buccal-lingual plane, traverses a central point of the tooth representation and is parallel to the vertical direction of the tooth.

18. The method according to items 11, 14-15, wherein at least two additional planes are orthogonal to both buccal-lingual plane and mesial-distal plane, and are at different distances from an occlusal end of a tooth and are between the occlusal end and a cervical end of the tooth.

19. The method according to items 11-18, wherein the number of sub-regions is obtained by intersecting the buccal-lingual plane, the mesial-distal plane and the additional planes.

20. The method according to any one of the preceding items, wherein the first tooth digital representation is a representation of a tooth from a subject, obtained with a scan, and the second tooth representation is a computer-based artificial model of a tooth.

21. The method according to any one of the preceding items, further comprising measurement of a change in position of the tooth between the at least first and the second tooth digital representation.

22. The method according to any one of the preceding items, wherein a central point of each tooth representation is calculated based on the average of the positions of each vertex of the representation.

23. The method according to items 21 or 22, wherein the change in position of a tooth is obtained by measuring the distance of the central point of the first tooth representation and the central point of the second tooth representation and based on a translation matrix.

24. The method according to any one of the preceding items, wherein the step of aligning each sub-region separately is based on correspondences between points in corresponding sub-regions of the at least first and second tooth digital representations.

25. The method according to any one of the preceding items, wherein the alignment of corresponding sub-regions is based on finding correspondences using the Iterative Closest Point technique.

26. The method according to any one of the preceding items, wherein the alignment of the tooth-to-tooth representations uses a starting point based on sub-regions alignment and is performed by finding correspondences using the Iterative Closest Point technique with an ICP search distance below a threshold, preferably 50 micrometers.

27. A system for acquisition and processing of a tooth digital representation comprising:

　　a. at least one input peripheral, such as a scanner, configured to generate image data of a jaw or a tooth;
　　b. at least one output peripheral, such as a display, configured to display at least one digital representation of jaw or teeth and to provide visual data on digital representation alignment; and
　　c. at least one processing unit configured to generate, based on the image data, digital representations of jaws and/or teeth and further configured to perform the steps according to items 1-26.

**Claims**

1. A computer implemented method for digital tooth representation subdivision and alignment, the method comprising the steps of:

　　a. obtaining at least a first and a second tooth digital representation of a tooth;
　　b. subdividing each of the at least first and second tooth digital representations into at least two sub-regions;
　　c. applying a separate alignment process for aligning a sub-region of the first tooth digital representation with a corresponding sub-region of the second tooth digital representation; and
　　d. based on the sub-regions alignment, aligning the first tooth digital representation to the second tooth digital representation.

2. The method according to claim 1, wherein the at least first and second tooth digital representation is a mesh, a point cloud, a voxel-based volumetric scan, or any other digital representation or digital model of a tooth.

3. The method according to any one of the preceding claims, further comprising the step of obtaining the at least first and second tooth digital representation by segmentation of respectively an at least first and second jaw representation.

4. The method according to any one of the preceding claims, further comprising the step of obtaining the at least first and second jaw representation from an intra-oral scan of a same subject at different points in time.

5. The method according to any one of the preceding claims, further comprising the step of aligning the at least first tooth digital representation and the second tooth digital representation directly based on a complete initial first tooth-to-tooth alignment using an Iterative Closest Point technique.

6. The method according to claim 5, further comprising the step of computing an indication of the quality of the complete initial first tooth-to-tooth alignment.

7. The method according to claim 6, wherein the subdivision of the at least first and second tooth digital representations into sub-regions is triggered when the indication of the quality of the complete initial first tooth-to-tooth is below a first threshold.

8. The method according to claims 6 or 7, wherein the indication of the quality of the complete initial first tooth-to-tooth alignment is based on an alignment matrix and/or an alignment parameter and/or a statistical histogram and/or a tooth difference map and/or a translation of a centre point.

9. The method according to any one of the preceding claims, wherein the first and second tooth digital representations are subdivided by a buccal-lingual plane into a buccal sub-region and a lingual sub-region.

10. The method according to claim 9, wherein the buccal-lingual plane is obtained, for incisors and canines, by identifying high positive curvature facets.

11. The method according to claim 9 or 10, wherein the buccal-lingual plane is obtained, for molar and/or pre-molar teeth, by use of a central vector field, centred at a central point of the tooth.

12. The method according to any one of the preceding claims, wherein the first and second tooth digital representations are subdivided by a mesial-distal plane into a mesial sub-region and a distal sub-region.

13. The method according to any one of the preceding claims, wherein the first and second tooth digital representations are subdivided by at least one additional plane, preferably two additional planes, into at least a cervical sub-region and at least an occlusal sub-region.

14. The method according to any one of the preceding claims, wherein the step of aligning each sub-region separately is based on correspondences between points in corresponding sub-regions of the at least first and second tooth digital representations.

15. A system for acquisition and processing of a tooth digital representation comprising:

> a. at least one input peripheral, such as a scanner, configured to generate image data of a jaw or a tooth;
> b. at least one output peripheral, such as a display, configured to display at least one digital representation of jaw or teeth and to provide visual data on digital representation alignment; and
> c. at least one processing unit configured to generate, based on the image data, digital representations of jaws and/or teeth and further configured to perform the steps according to claims 1-14.

001

| Obtaining jaw representations | 002 |

↓

| Segment the jaw representations into tooth representations | 003 |

↓

| Subdividing tooth representations into sub-regions | 004 |

↓

| Aligning corresponding sub-regions | 005 |

↓

| Based on the sub-regions alignment, aligning the tooth digital representations | 006 |

FIG. 1

FIG. 2

213

200

FIG. 3

FIG. 4

FIG. 5

201

202

FIG. 6

101   105        102

103

104

FIG. 7

201

202

203

205 204

FIG. 8

900

901

FIG. 9A

FIG. 9B

FIG. 10

Europäisches
Patentamt
European
Patent Office
Office européen
des brevets

# EUROPEAN SEARCH REPORT

Application Number

**EP 22 16 2838**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 811 916 A (3SHAPE AS) 17 December 2021 (2021-12-17) * paragraphs [0014], [0027], [0174], [0175], [0031], [0178] * * figure 10 * ----- | 1-15 | INV. G06T7/00 G06T7/12 G06T7/162 G06T7/11 G06T7/30 G06T7/155 |
| X | US 2015/235104 A1 (VAN LIERDE CARL [BE] ET AL) 20 August 2015 (2015-08-20) * figure 6 * * paragraphs [0039], [0056], [0055], [0079], [0080], [0082], [0083], [0095], [0037], [0054] * ----- | 1-4,14, 15 | |

TECHNICAL FIELDS
SEARCHED      (IPC)

**G06T**

The present search report has been drawn up for all claims

| Place of search | Date of completion of the search | Examiner |
|---|---|---|
| Munich | 9 September 2022 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 246 432 A1

## ANNEX TO THE EUROPEAN SEARCH REPORT
## ON EUROPEAN PATENT APPLICATION NO.

EP 22 16 2838

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2022

| Patent document cited in search report | | Publication date | Patent family member(s) | | Publication date |
|---|---|---|---|---|---|
| CN 113811916 | A | 17-12-2021 | CN | 113811916 A | 17-12-2021 |
| | | | EP | 3938997 A1 | 19-01-2022 |
| | | | JP | 2022523597 A | 25-04-2022 |
| | | | KR | 20210138652 A | 19-11-2021 |
| | | | US | 2022148263 A1 | 12-05-2022 |
| | | | WO | 2020182880 A1 | 17-09-2020 |
| US 2015235104 | A1 | 20-08-2015 | EP | 2901420 A1 | 05-08-2015 |
| | | | JP | 6227654 B2 | 08-11-2017 |
| | | | JP | 2016502159 A | 21-01-2016 |
| | | | US | 2015235104 A1 | 20-08-2015 |
| | | | WO | 2014049049 A1 | 03-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2345387 A2

**Non-patent literature cited in the description**

- A method for registration of 3-D shapes. *IEEE Transactions on Pattern Analysis and Machine Intelligence*, 1992, vol. 14 (2), 239-256